# EUROPEAN PATENT APPLICATION

(11) **EP 4 231 217 A1**
(43) Date of publication of application: **23.08.2023**
(21) Application number: 22199310.8
(22) Date of filing: 01.10.2022
(51) Int. Cl.: G06Q 10/10

(54) **INFORMATION PROCESSING APPARATUS, PROGRAM, AND INFORMATION PROCESSING METHOD**

(30) Priority: 16.02.2022 JP 2022022296
(71) Applicant: Fujifilm Business Innovation Corp., Tokyo 107-0052 (JP)
(72) Inventor: PENG, Xinyu, Yokohama (JP)
(74) Representative: Meissner Bolte Partnerschaft mbB

(57) **Abstract**

An information processing apparatus includes a processor capable of accessing a business card management database in which business card information described on a business card of a business card exchange destination user to whom a user has exchanged business cards is registered. The processor is configured to: during a video conference meeting in which the user and the business card exchange destination user participate, identify a role of the business card exchange destination user in the video conference, based on at least one of information input by the user or the business card information of the business card exchange destination user; and register information indicating the identified role in association with the business card information of the business card exchange destination user.

## Description

### Background

### (i) Technical Field

The present disclosure relates to an information processing apparatus, a program, and an information processing method.

### (ii) Related Art

Hitherto, there has been proposed a business card management system for managing business card information described on the business card of a business card exchange destination user to whom a user has exchanged business cards.

For example, Japanese Patent No. 6899123 discloses a business card management system as follows. At the time of registration of business card information, the business card management system stores intention information related to a business card exchange destination user according to the business card information (such as the first impression of the business card exchange destination user, the possibility of collaboration, the date of the appointment, memo, and whether to register the business card exchange destination user as a very important person (VIP)) in association with the business card information.

By the way, consider the case of performing a video conference such as a business negotiation between a user and a business card exchange destination user. In such a video conference, it is preferable that the user be able to register the "role" of the business card exchange destination user in the video conference in association with the business card information of the business card exchange destination user. Possible roles include but are not limited to, for example, observer, liaison (contact), promoter, approver, authorizer, user, and evaluator. By registering the role, the user is able to grasp, after the end of the video conference, what role the business card exchange destination user had in the video conference.

Here, after the end of the video conference with the business card exchange destination user, it is conceivable that the user forgets the role of the business card exchange destination user in the video conference. This is especially noticeable when multiple participants have participated in the video conference. Needless to say, if the user forgets the role of the business card exchange destination user in the video conference, the user is unable to register the role in association with the business card information of the business card exchange destination user.

### Summary

Accordingly, it is an object of the present disclosure to identify, in a video conference with a business card exchange destination user, the role of the business card exchange destination user in the video conference, and then registering the role in association with business card information of the business card exchange destination user.

According to a first aspect of the present disclosure, there is provided an information processing apparatus including a processor capable of accessing a business card management database in which business card information described on a business card of a business card exchange destination user to whom a user has exchanged business cards is registered, the processor being configured to: during a video conference meeting in which the user and the business card exchange destination user participate, identify a role of the business card exchange destination user in the video conference, based on at least one of information input by the user or the business card information of the business card exchange destination user; and register information indicating the identified role in association with the business card information of the business card exchange destination user.

According to a second aspect of the present disclosure, the processor is configured to: display a display screen including a window of the video conference on a display; and based on information input by the user by performing an operation on the display screen, identify the role of the business card exchange destination user.

According to a third aspect of the present disclosure, the processor is configured to: based on information input by the user by performing an operation on a display screen, register importance of the role of the business card exchange destination user in the video conference; and register information indicating the importance of the identified role in association with the business card information of the business card exchange destination user.

According to a fourth aspect of the present disclosure, a plurality of the business card exchange destination users participate in the video conference; and the processor is configured to: during the video conference meeting, identify a role of each business card exchange destination user in the video conference; and in association with the business card information of each business card exchange destination user, register the business card information and the role of another business card exchange destination user who has participated in the video conference.

According to a fifth aspect of the present disclosure, the processor is configured to identify the role of the business card exchange destination user based on the business card information of the business card exchange destination user.

According to a sixth aspect of the present disclosure, the processor is configured to: present the role of the business card exchange destination user, identified by the processor, to the user; and modify the role of the business card exchange destination user in response to an instruction from the user.

According to a seventh aspect of the present disclosure, there is provided a program causing a computer to execute a process, the process including: accessing a business card management database in which business card information described on a business card of a business card exchange destination user to whom a user has exchanged business cards is registered; during a video conference meeting in which the user and the business card exchange destination user participate, identifying a role of the business card exchange destination user in the video conference, based on at least one of information input by the user or the business card information of the business card exchange destination user; and registering information indicating the identified role in association with the business card information of the business card exchange destination user.

According to an eighth aspect of the present disclosure, there is provided an information processing method including: accessing a business card management database in which business card information described on a business card of a business card exchange destination user to whom a user has exchanged business cards is registered; during a video conference meeting in which the user and the business card exchange destination user participate, identifying a role of the business card exchange destination user in the video conference, based on at least one of information input by the user or the business card information of the business card exchange destination user; and registering information indicating the identified role in association with the business card information of the business card exchange destination user.

According to the first, seventh, or eighth aspect of the present disclosure, during a video conference meeting with a business card exchange destination user, the role of the business card exchange destination in the video conference user may be identified, and then the identified role may be registered in association with business card information of the business card exchange destination user.

According to the second aspect of the present disclosure, the user may specify the role of the business card exchange destination user by performing an operation on a display screen where the window of the video conference is displayed.

According to the third aspect of the present disclosure, the user may register the importance of the role of the business card exchange destination user.

According to the fourth aspect of the present disclosure, the user may collectively grasp a plurality of business card exchange destination users who are the participants of the video conference, and the role of each business card exchange destination user.

According to the fifth aspect of the present disclosure, the role of the business card exchange destination user may be identified without having the user specify the role of the business card exchange destination user.

According to the sixth aspect of the present disclosure, the user may modify the role of the business card exchange destination user identified by the processor.

### Brief Description of the Drawings

An exemplary embodiment of the present disclosure will be described in detail based on the following figures, wherein:
Fig. 1 is a schematic configuration diagram of an information processing system according to an exemplary embodiment;
Fig. 2 is a schematic configuration diagram of an information processing apparatus according to the present exemplary embodiment;
Fig. 3 is a diagram illustrating an example of the contents of a business card management database (DB);
Fig. 4 is a diagram illustrating an example of the contents of a role DB;
Fig. 5 is a diagram illustrating an example of the contents of a conference DB;
Fig. 6 is a diagram illustrating an example of a video conference window and a business card window;
Fig. 7 is a diagram illustrating an example of a role registration dialog;
Fig. 8 is a diagram illustrating an example of displaying a set role;
Fig. 9 is a diagram illustrating an example of a conference information editing dialog;
Fig. 10 is a diagram illustrating an example of a business card information display screen;
Fig. 11 is a diagram illustrating an example of a conference information display screen; and
Fig. 12 is a flowchart illustrating the flow of a process performed by the information processing apparatus according to the present exemplary embodiment.

### Detailed Description

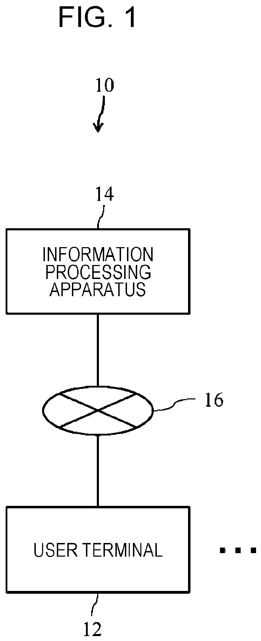

Fig. 1 is a schematic configuration diagram of an information processing system 10 according to an exemplary embodiment. The information processing system 10 according to the present exemplary embodiment includes a plurality of user terminals 12, which are used by a plurality of users, and an information processing apparatus 14, which provides a business card management service (details will be described later) to users. Each user terminal 12 and the information processing apparatus 14 are connected to each other communicatively via a communication line 16 such as the Internet or a local area network (LAN).

The user terminal 12 is a terminal used by a user of the business card management service. The user terminal 12 includes but is not limited to a computer such as a personal computer, a tablet terminal, or a smartphone. The user terminal 12 includes a communication interface for communicating with the information processing apparatus 14 via the communication line 16, an input interface for accepting user instructions, a display that displays screens provided by the information processing apparatus 14, a memory for storing data, and a processor that executes each process.

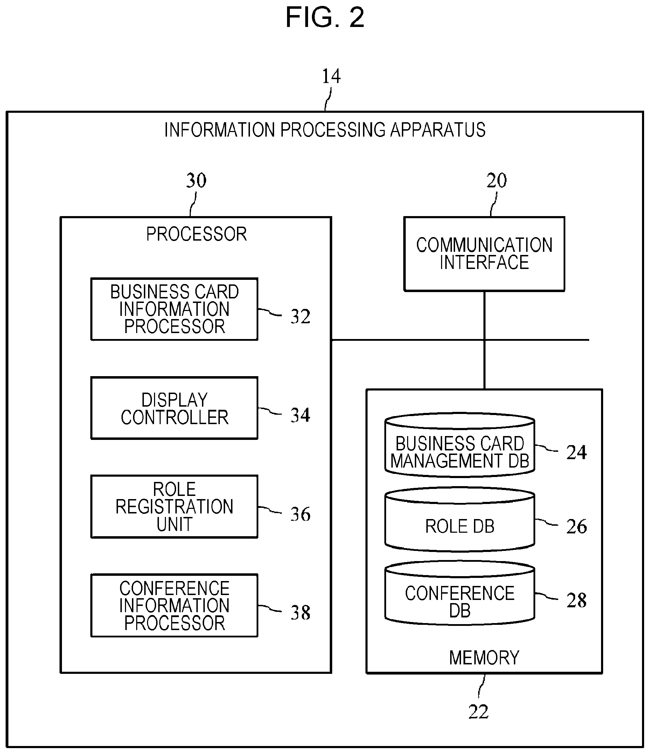

Fig. 2 is a schematic configuration diagram of the information processing apparatus 14 according to the present exemplary embodiment. Although the information processing apparatus 14 is a server computer in the present exemplary embodiment, the information processing apparatus 14 may be any apparatus as long as it is capable of exhibiting functions described below (in other words, as long as it is capable of providing the business card management service described below). The functions of the information processing apparatus 14 described below may be realized by a plurality of computers that cooperate with one another.

The information processing apparatus 14 is an apparatus that provides the business card management service to users. The business card management service is a service that accepts and manages, from a user that has already been registered, information indicating the contents described on the user's business card (information indicating the contents described on the business card will be referred to as "business card information" hereinafter), and manages the business card information of a business card exchange destination user to whom the user has exchanged business cards.

Specifically, upon registration of a user with the business card management service, the user sends business card image data obtained by shooting or scanning the user's business card to the information processing apparatus 14. Accordingly, the user's business card information is registered along with the user's identification information (such as a user identification (ID) or a unique user name) in the business card management service. The business card information may include not only the business card image data itself, but also data on characters (including numbers) extracted by analyzing the business card image data.

In addition, business card exchange processing is executable in the business card management service. The business card exchange processing is processing that allows a user to browse the business card information of a business card exchange destination user. For example, consider user A and user B who have registered their business card information in the business card management service. If user A and user B have not performed the business card exchange processing in the business card management service, user A is unable to browse user B's business card information, and user B is unable to browse user A's business card information. Here, when the business card management service executes the business card exchange processing between user A and user B, user A is able to browse user B's business card information, and user B is also able to browse user A's business card information. In the present exemplary embodiment, the business card exchange processing in the business card management service is executed when an agreement is obtained from both user A and user B.

In addition, the business card management service provided by the information processing apparatus 14 may be operated in conjunction with a video conference service provided by the information processing apparatus 14 or other apparatuses. Conjunction processing with the video conference service will be described later.

A communication interface 20 includes a network interface card (NIC) or the like. The communication interface 20 exhibits a function of communicating with each user terminal 12 via the communication line 16.

A memory 22 includes a hard disk drive (HDD), a solid state drive (SSD), an embedded multimedia card (eMMC), read only memory (ROM), random access memory (RAM), or the like. The memory 22 stores an information processing program for causing each unit of the information processing apparatus 14 to operate. Note that the information processing program may be stored in a non-transitory computer readable storage medium such as a Universal Serial Bus (USB) memory or a compact-disc ROM (CD-ROM). The information processing apparatus 14 is capable of reading and executing the information processing program from such a storage medium. In addition, as illustrated in Fig. 2, the memory 22 stores a business card management database (DB) 24, a role DB 26, and a conference DB 28.

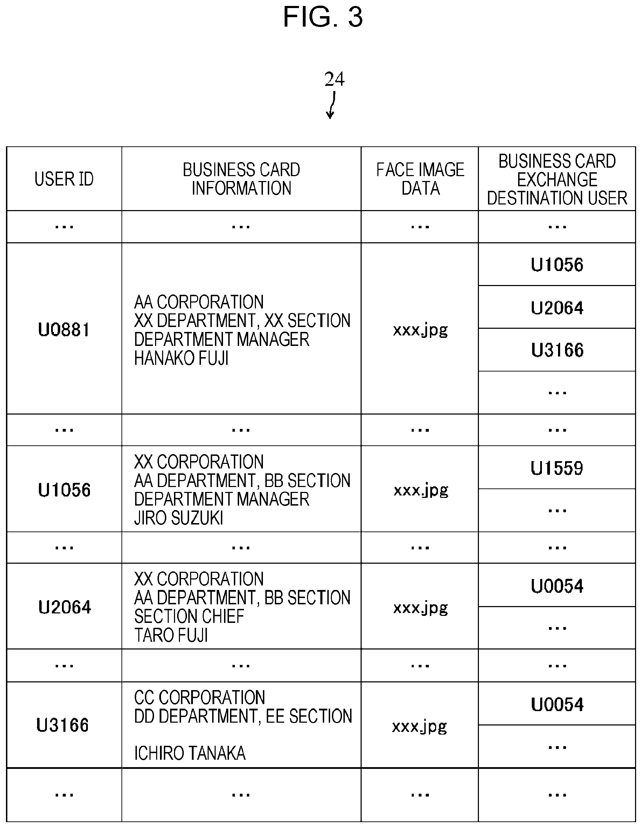

The business card management DB 24 is a database in which business card management data on each of a plurality of users who have been registered as users in the business card management service is stored. Fig. 3 is a diagram illustrating an example of the contents of the business card management DB 24. In Fig. 3, the contents of the business card management DB 24 are illustrated in a table format, and one record represents one piece of business card management data (related to one user). As illustrated in Fig. 3, the business card management data is data in which a user ID, business card information, face image data, and a business card exchange destination user are associated with one another. Details of the contents of the business card management DB 24 will be described later together with processing of a processor 30 (specifically, a business card information processor 32).

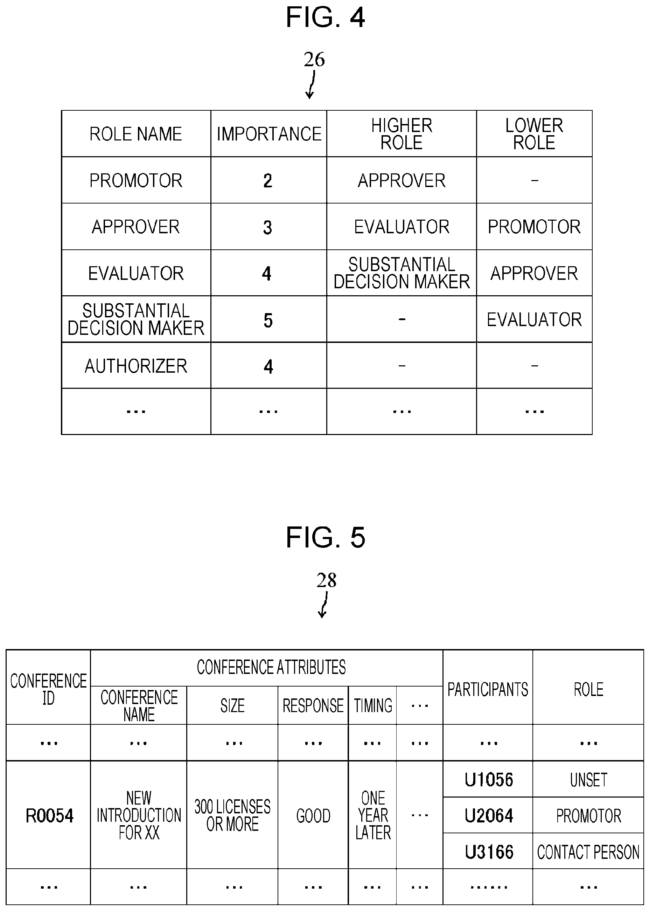

The role DB 26 is a database in which, in a video conference which is provided by the video conference service and in which a plurality of users of the business card management service participate, the definitions of roles of other participants in the video conference, which may be set by a user, are stored. Fig. 4 is a diagram illustrating an example of the contents of the role DB 26. The contents of the role DB 26 may be set in advance by, for example, the administrator of the business card management service. Alternatively, as will be described later, a user may create a new role and register it in the role DB 26. It is preferable that the role DB 26 be provided for each user. The role DB 26 for a certain user includes initially registered roles that are registered in advance by, for example, the administrator of the business card management service, and roles registered by the user. Details of the contents of the role DB 26 will be described later along with processing of the processor 30 (specifically, a display controller 34 and a role registration unit 36).

The conference DB 28 is a database in which conference information on a video conference which is provided by the video conference service and in which a plurality of users of the business card management service participate is stored. Fig. 5 is a diagram illustrating an example of the contents of the conference DB 28. The conference information includes a conference ID that uniquely identifies a conference, conference attributes representing the contents of the conference, participants of the conference, and the role of each participant in the video conference. It is also preferable that the conference DB 28 be provided for each user. In the conference DB 28 for a certain user, conference attributes indicating the contents of a conference as seen from the user, participants participating in the conference other than the user, and the role of each participant in the video conference as seen from the user are registered. Details of the contents of the conference DB 28 will be described later along with processing of the processor 30 (specifically, the role registration unit 36 and a conference information processor 38) .

Referring back to Fig. 2, the processor 30 refers to a processor in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device). The processor 30 is broad enough to encompass one processor or plural processors in collaboration which are located physically apart from each other but may work cooperatively. As illustrated in Fig. 2, the processor 30 exerts functions as the business card information processor 32, the display controller 34, the role registration unit 36, and the conference information processor 38 in accordance with the information processing program stored in the memory 22.

The business card information processor 32 executes a process of registering business card management data in the business card management DB 24, and processing such as business card exchange processing in the business card management service.

At first, when a user accesses the information processing apparatus 14 from the user's user terminal 12 and registers the user in the business card management service, the business card information processor 32 obtains a user ID that uniquely identifies the user, generates business card management data including the user ID, and registers the business card management data in the business card management DB 24 (see Fig. 3). Note that the business card information processor 32 may register, in place of or in addition to the user ID, a user name determined by the user at the time of user registration as information that uniquely identifies the user, in the business card management DB 24. In that case, if the user specifies a user name already used by another user at the time of user registration, preferably the business card information processor 32 does not register the user name, and notifies the user that the user name is unusable. Moreover, one item or a combination of items included in later-described business card information may serve as information that uniquely identifies the user.

When a user who has already been registered as a user sends the user's business card image data to the business card management service, the business card information processor 32 registers the business card image data as business card information in association with the user's user ID in the business card management DB 24. In addition, the business card information processor 32 analyzes the business card image data to extract business card information, which is character data, and registers the business card information, which is the extracted character data, in the business card management DB 24. Business card information, which is character data, may include a plurality of items. In the example illustrated in Fig. 3, business card information includes the following items: company name, department name, job title, and name. Of course, these are not the only possible items of the business card information.

The business card information processor 32 registers the user's face image data in association with the user's user ID in the business card management DB 24. The business card information processor 32 may obtain the user's face image data when the user sends the user's face image data to the business card management service, or, if the user's business card has a photo of the user's face, the business card information processor 32 may extract face image data from the business card image data.

In addition, the business card information processor 32 executes business card exchange processing in which users exchange business cards on the business card management service. As described above, in the present exemplary embodiment, the business card information processor 32 executes business card exchange processing when an agreement is obtained from both of two users of the business card management service. Upon execution of the business card exchange processing between user A and user B, the business card information processor 32 registers, in association with the user ID of user A, the user ID of user B as a business card exchange destination user of user A, and registers, in association with the user ID of user B, the user ID of user A as a business card exchange destination user of user B in the business card management DB 24. As described above, when the business card exchange processing is performed, user A is able to browse the business card information of user B, and user B is able to browse the business card information of user A.

The display controller 34 executes a process of displaying various screens provided by the business card management service on a display of the user terminal 12, which serves as a display.

The role registration unit 36 executes a process of identifying the role of each user in a video conference in which a plurality of users of the business card management service participate, and registering the identified role in association with the user's business card information in the conference DB 28.

The conference information processor 38 executes a process of identifying a conference attribute that is information on a video conference in which a plurality of users of the business card management service participate, and registering the identified conference attribute in the conference DB 28.

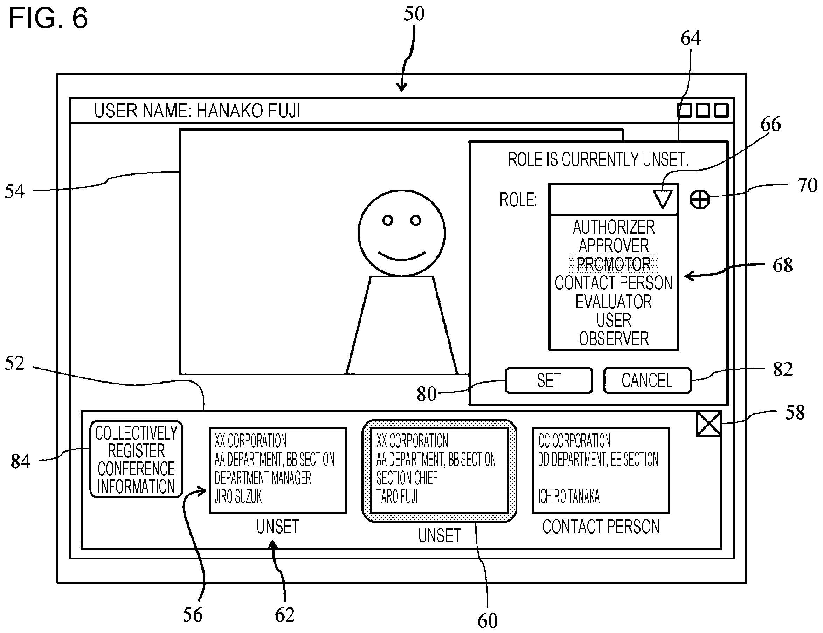

Hereinafter, with appropriate reference to Figs. 6 to 11, processing of the display controller 34, the role registration unit 36, and the conference information processor 38 will be described in detail.

As mentioned above, the business card management service may operate in conjunction with the video conference service. For example, the business card management service associatively stores the user ID of a user of the business card management service and the user ID of the same user in the video conference service. When a plurality of users of the business card management service log in to the video conference service and start a video conference, the user ID of each of the plurality of users in the video conference service is provided from the video conference service to the business card management service. The business card management service may identify, on the basis of the provided user ID in the video conference service, the user ID in the business card management service of a user participating in the video conference.

When a plurality of users of the business card management service start a video conference, the conference information processor 38 obtains the conference ID of the video conference, and registers conference information including the conference ID and each participant's user ID in the conference DB 28 (see Fig. 5). Here, attention is paid to a user of interest who is one of the plurality of users. The conference information processor 38 registers, in the conference DB 28 of the user of interest, conference information including the conference ID and the user ID(s) of one or more participants who are users, other than the user of interest, participating in the video conference. At this point, conference attributes and the role of each participant in the video conference may be unregistered.

When the user of interest and one or more participants start a video conference, the video conference service displays a video conference window 50 on the display of each of the user terminals 12 used by the user of interest and the participant(s). Hereinafter, the present exemplary embodiment will be described on the basis of a screen displayed on the user terminal 12 of the user of interest.

Fig. 6 is a diagram illustrating how the video conference window 50 and a business card window 52 are displayed on the display of the user terminal 12 used by the user of interest (who is "Hanako Fuji" hereinafter).

The video conference window 50 includes a view display area 54. The view display area 54 displays an image shot with a camera connected to each of the user terminals 12 used by the participants of the video conference, a document or a material shared by the user of interest or the participant(s). In the case of displaying a shot image in the view display area 54, it is preferable to display an image shot with a camera connected to the user terminal 12 used by a participant who is currently speaking in the video conference.

The business card window 52 is a window provided by the business card management service (in other words, displayed by the display controller 34). The business card window 52 displays business card information 56 of one or more business card exchange destination users of the user of interest, among the participant(s) participating in the video conference. The display controller 34 refers to the business card management data of the user of interest registered in the business card management DB 24, identifies one or more business card exchange destination users of the user of interest from among the participant(s) of the video conference, and displays the business card information 56 of the identified business card exchange destination user(s) in the business card window 52. By displaying the business card window 52, a user who is participating in a video conference may easily grasp the business card information of a participant of the video conference.

In the present exemplary embodiment, besides the user of interest, a plurality of users (a plurality of business card exchange destination users of the user of interest) participate in the video conference. Therefore, the business card window 52 illustrated in Fig. 6 displays a plurality of items of business card information 56 corresponding to the plurality of participants. Note that the business card window 52 includes a close button 58, and, when the close button 58 is operated by the user of interest, the display controller 34 deletes the business card window 52.

The display controller 34 is able to highlight the business card information 56 of a participant. For example, as a highlight, the display controller 34 is able to display a highlight image 60 around the business card information 56, as illustrated in Fig. 6. Specifically, the display controller 34 analyzes an image displayed in the view display area 54 to extract a person's face from the image. Next, the display controller 34 identifies a person included in the image displayed in the view display area 54 by collating the extracted face with face image data stored in the business card management DB 24. Then, the display controller 34 displays the highlight image 60 around the business card information 56 of the identified person. Note that a process of extracting a person's face from an image displayed in the view display area 54 may be executed in the video conference service.

In addition, the display controller 34 displays a role icon 62 indicating the role of each participant in the video conference (hereinafter simply referred to as "each participant's role" or the like) in the business card window 52. In the present exemplary embodiment, as illustrated in Fig. 6, the display controller 34 displays, in a manner corresponding to each participant's business card information 56, the role icon 62 in which the role of the participant is represented by characters in the vicinity of the business card information 56.

The role of each participant may be set by the user of interest during a video conference meeting. In other words, the role registration unit 36 is able to set the roles of the participants of the video conference in response to entries from the user of interest during the video conference meeting. Specifically, the user of interest may input information indicating the role of each participant to the business card management service by performing an operation on the display screen (the business card window 52 in the present exemplary embodiment) including the video conference window 50 during the video conference meeting.

In the present exemplary embodiment, when the user of interest operates the business card information 56 or the role icon 62, the display controller 34 displays, on the display of the user terminal 12 used by the user of interest, a role setting dialog 64 for setting the role of a participant indicated by business card information 56 corresponding to the business card information 56 or the role icon 62.

The role setting dialog 64 includes a role selection button 66. When the user of interest operates the role selection button 66, the display controller 34 refers to the role DB 26, and displays a role list 68 indicating roles registered in the role DB 26 in the role setting dialog 64. The user of interest is able to select the role of the participant from the role list 68.

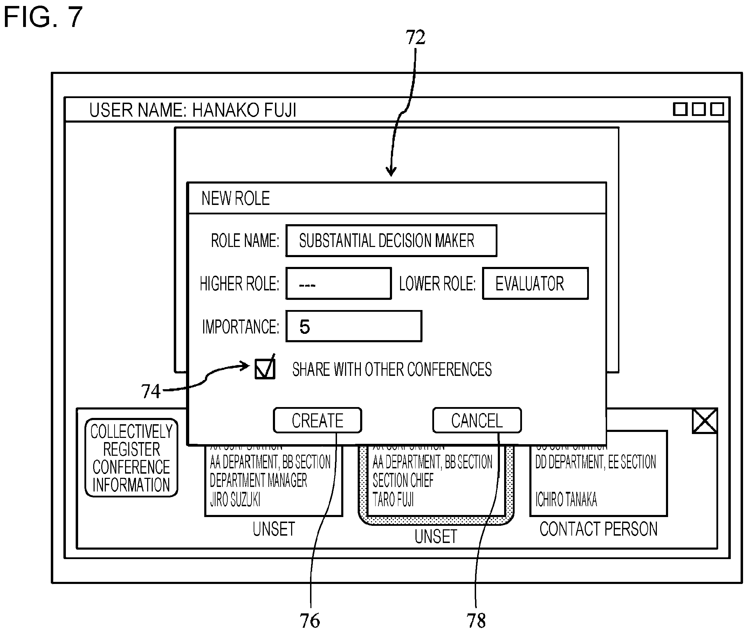

The role setting dialog 64 also includes a role creation button 70. If there is no desired role in the role list 68, the user of interest operates the role creation button 70. When the user of interest operates the role creation button 70, the display controller 34 displays a role registration dialog 72 illustrated in Fig. 7 on the display of the user terminal 12 used by the user of interest.

In the role registration dialog 72, the user of interest is able to enter the name of a role to be newly registered (role name), the higher role and the lower role of the role, and the importance of the role.

The higher role is a role that is more important than the role in the video conference, and the lower role is a role that is less important than the role in the video conference. For example, if a role to be newly created is "approver", the higher role may be "evaluator" and the lower role may be "promoter". The higher role and the lower role may be selected from the roles already registered in the role DB 26, or new roles may be registered. Note that the user of interest need not enter the higher role or the lower role.

Importance is information that represents the importance of the role in the video conference using an objective index. Importance is represented by, for example, a numerical value (such as 1 to 5) or an alphabetic character (such as A to E). Note that the user of interest need not enter the importance.

Moreover, the role registration dialog 72 includes a role sharing checkbox 74. By checking the role sharing checkbox 74, the user of interest is able to use the newly created role in other video conferences. If the role sharing checkbox 74 is not selected, the new role registered in the role registration dialog 72 is valid only for this video conference.

When the user of interest inputs a role name (preferably additionally inputs a higher role, a lower role, and importance) in the role registration dialog 72 and operates a create button 76, information on the created role and information indicating whether the role sharing checkbox 74 has been selected is sent from the user terminal 12 to the information processing apparatus 14. On the basis of the information received from the user terminal 12, the processor 30 registers the new role in the role DB 26 (see Fig. 4) in the case where the role sharing checkbox 74 has been selected. Specifically, the processor 30 registers the role name, importance, higher role, and lower role of the new role created by the user in association with one another in the role DB 26. In the case where the role sharing checkbox 74 has not been selected, the processor 30 does not register the new role in the role DB 26, and, assuming that the role is a role valid only for this video conference, keeps the information in the memory 22 until the video conference ends.

Note that the role registration dialog 72 includes a cancel button 78, and, when the user of interest operates the cancel button 78, the display controller 34 displays the role setting dialog 64 (see Fig. 6) again.

When the user of interest selects a role and operates a set button 80 in the role setting dialog 64, the user ID of the participant (business card exchange destination user) and information indicating the selected role are sent from the user terminal 12 to the information processing apparatus 14. On the basis of the information received from the user terminal 12, the role registration unit 36 registers the role of the participant in conference information (see Fig. 5) of the conference of the user of interest that was previously registered in the conference DB 28. For example, if "Hanako Fuji", who is the user of interest, sets the role of "Taro Fuji", who is a participant, to "promoter", the role registration unit 36 registers the role "promoter" to the user ID "U2064" (see Fig. 3) of "Taro Fuji" in the conference information of the user of interest.

Note that the role setting dialog 64 includes a cancel button 82, and, when the user of interest operates the cancel button 82, the display controller 34 deletes the role setting dialog 64.

In the business card management DB 24 illustrated in Fig. 3, each user's user ID and business card information are associated with each other. In contrast, in the conference DB 28 illustrated in Fig. 5, each participant's user ID and role are associated with each other. Therefore, when the role registration unit 36 registers a role in association with the user ID of a participant in the conference DB 28, it means that information indicating the participant's role in the video conference is registered in association with the participant's business card information. For example, registering the role "promotor" for a participant with the user ID "U2064" in the conference DB 28 means that the role "promotor" in the video conference is registered in association with the business card information of the user ID "U2064" (Taro Fuji's business card information, see Fig. 3). Accordingly, as will be described later, when the user of interest displays the business card information of the participant, it becomes possible to additionally display the participant's role in the video conference.

In addition, in the role DB 26 illustrated in Fig. 4, importance may be associated with each role. Therefore, when the role registration unit 36 registers a role in association with the user ID of a participant in the conference DB 28, if importance is associated with the role, it means that information indicating the importance of the role is registered in association with the participant's business card information.

Moreover, as in the present exemplary embodiment, when a plurality of participants other than the user of interest participate in the video conference, as illustrated in Fig. 5, a combination of each of the participant's user ID and role is associated with the conference ID of this video conference in the conference information of the video conference of the user of interest. This means that the business card information and roles of other participants of the video conference are associated with the business card information of each participant of the video conference. For example, the role "promoter" of a participant with the user ID "U2064" and the role "contact person" of a participant with the user ID "U3166", who are registered in the conference DB 28, are associated with the business card information of the user ID "U1056". Accordingly, as will be described later, when the user of interest displays the business card information of this participant, it is possible to display other participants of the video conference and their roles.

As described above, conference information of a video conference is stored for each user in the conference DB 28. Therefore, the role of a participant as seen from the user of interest and the role of the same participant as seen from another participant participating in this video conference may be different. For example, even in the case where the role of the participant "Taro Fuji" as seen from "Hanako Fuji", who is the user of interest, is "promoter", the role of the participant "Taro Fuji" as seen from "Jiro Suzuki", who is another participant of the video conference, need not be "promoter", but may be, for example, "evaluator". In this case, in the conference information of "Jiro Suzuki", the role "evaluator" is associated with the user ID "U2064" of "Taro Fuji".

Furthermore, as described above, each participant's role is associated with each video conference in the conference DB 28. Therefore, the role of a participant in a first video conference as seen from the user of interest and the role of the same participant in a second video conference different from the first video conference as seen from the user of interest may be different. For example, even in the case where the role of the participant "Taro Fuji" in the first video conference as seen from "Hanako Fuji", who is the user of interest, is "promoter", the role of the participant "Taro Fuji" in the second video conference as seen from "Hanako Fuji", who is the user of interest, need not be "promoter", but may be, for example, "evaluator". In this case, the role "promoter" is associated with the user ID "U2064" of "Taro Fuji" in the conference information of the first video conference of "Hanako Fuji", and the role "evaluator" is associated with the user ID "U2064" of "Taro Fuji" in the conference information of the second video conference of "Hanako Fuji".

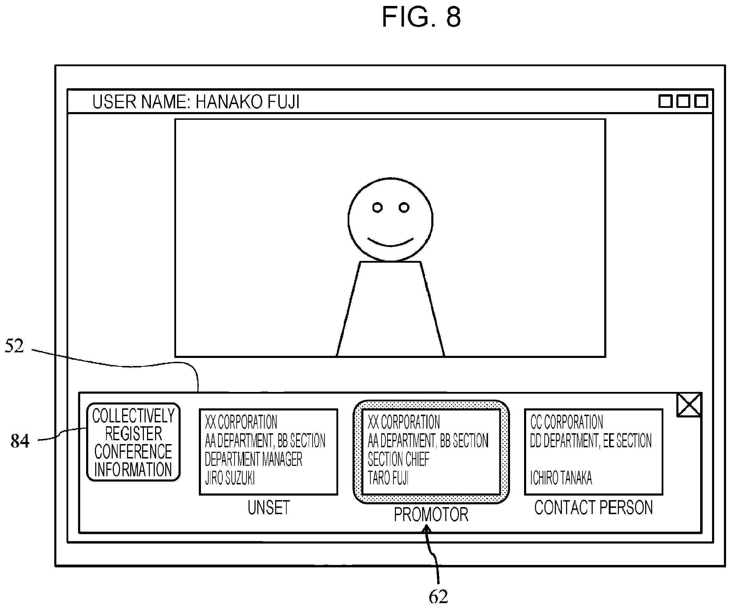

When the role registration unit 36 registers the role of a participant in response to an operation performed by the user of interest in the role setting dialog 64, the display controller 34 changes the contents of the role icon 62 corresponding to the business card information 56 of the participant in the business card window 52. Fig. 8 illustrates the state in which the role icon 62 of the participant "Taro Fuji" has been changed to "promoter". In addition, the display controller 34 may refer to the role DB 26 to identify the importance of the role, and may indicate the importance of the role in the role icon 62. For example, characters indicated by the role icon 62 may be changed to, for example, "promoter importance: 2".

The role registration unit 36 may identify and register the roles of participants using a method other than designation by the user of interest. In this case, the role registration unit 36 identifies, on the basis of the business card information of a business card exchange destination user of the user of interest, who is participating in a video conference, the role of the business card exchange destination user (namely, the participant).

As described above, an example in which, when the user of interest has set the role of the participant "Taro Fuji" to "promoter", the role registration unit 36 identifies the role of another participant "Jiro Suzuki" without using designation of the user of interest will be described. Firstly, the role registration unit 36 refers to the business card management DB 24 to identify the job title of the participant "Taro Fuji" whose role has been set by the user of interest. Referring to Fig. 3, the job title of "Taro Fuji" is identified as "section chief". Next, the role registration unit 36 refers to the business card management DB 24 to identify the job title of "Jiro Suzuki", who is another participant and whose role is to be identified. Referring to Fig. 3, the job title of "Jiro Suzuki" is identified as "department manager". Here, the role registration unit 36 compares the job title of "Taro Fuji" with the job title of "Jiro Suzuki", thereby grasping that the job title of Jiro Suzuki is higher. Information indicating the hierarchical relationship of the job titles is separately stored in the memory 22, and the role registration unit 36 is able to identify the hierarchical relationship of the job titles on the basis of this information.

Furthermore, the role registration unit 36 refers to the role DB 26 to identify the higher role or lower role of the role "promoter" of "Taro Fuji", which has been set by the user of interest. As described above, since the job title "department manager" of the participant "Jiro Suzuki" whose role is to be identified is higher than the job title "section chief" of "Taro Fuji", the role registration unit 36 identifies the higher role of the role "promoter" here. Referring to Fig. 4, the role "approver" is identified as the higher role of the role "promoter". The role registration unit 36 registers the identified role "approver" in association with the user ID of "Jiro Suzuki" in the conference information of the user of interest in the conference DB 28.

As described above, when the role registration unit 36 automatically registers the role of a participant without using designation of the user of interest, the registered role may not be correct. Therefore, it is preferable that the display controller 34 present the role of a participant automatically registered by the role registration unit 36 to the user of interest, and then accept any modifications to the role from the user of interest. As a method of presentation, for example, the role icon 62 indicating a role automatically registered by the role registration unit 36 may be displayed in the business card window 52. In this case, the role icon 62 may be highlighted so as to indicate that the role has been automatically registered by the role registration unit 36.

The user of interest checks the presented role of the participant, which has been automatically registered by the role registration unit 36, and if necessary, performs a process of modifying the role. In other words, the role registration unit 36 modifies the automatically-registered role of the participant in response to an instruction from the user of interest. Modifying a role may be performed in the same way as setting a role. For example, in response to the user of interest's operation on the business card information 56 or the role icon 62, the display controller 34 displays the role setting dialog 64. As described above, the user of interest is able to set the modified role of the participant in the role setting dialog 64.

As described above, in the present exemplary embodiment, the user of interest is able to set the role of a participant during a video conference meeting, and the set role is registered in association with the business card information of the participant. This may prevent a situation where a user who is trying to register the role of a participant after the end of a video conference forgets the role of the participant and thus is unable to register the role of the participant.

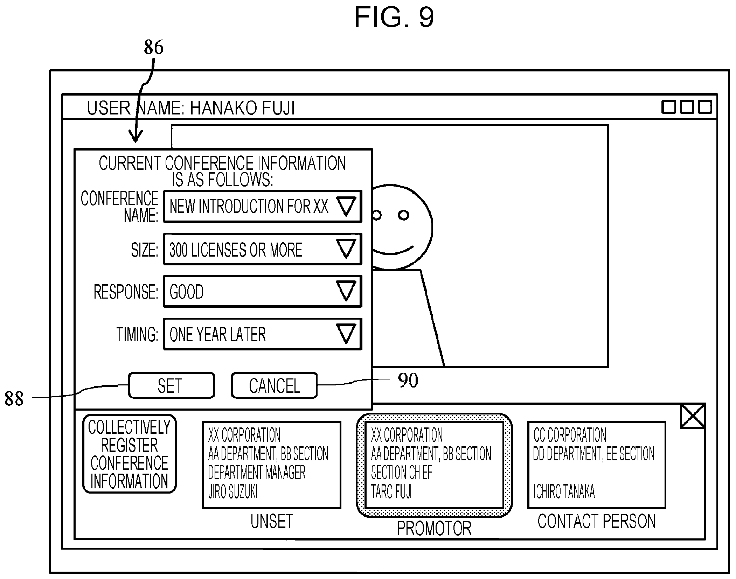

Referring back to Fig. 6, the business card window 52 includes an edit-conference-information button 84. When the user of interest operates the edit-conference-information button 84, the display controller 34 displays a conference information editing dialog 86 illustrated in Fig. 9 on the display of the user terminal 12 used by the user of interest.

In the conference information editing dialog 86, the user of interest is able to set conference attributes of the video conference, such as the conference name, size, response, and timing of the video conference. When the user of interest sets these items of conference information and operates a set button 88, the processor 30 registers these items of conference information as conference information of the video conference (see Fig. 5) of the user of interest in the conference DB 28. As described above, since conference information is registered for each user, the conference attributes (especially a response and the like) may be based on the subjectivity of the user of interest.

As illustrated in Fig. 5, the conference attributes are associated with business card information of a plurality of participants of the video conference. Therefore, when the user of interest sets conference attributes in the conference information editing dialog 86, it means that the conference attributes are collectively associated with the business card information of a plurality of participants who have participated in the video conference.

Note that the conference information editing dialog 86 includes a cancel button 90, and, when the user of interest operates the cancel button 90, the display controller 34 deletes the conference information editing dialog 86.

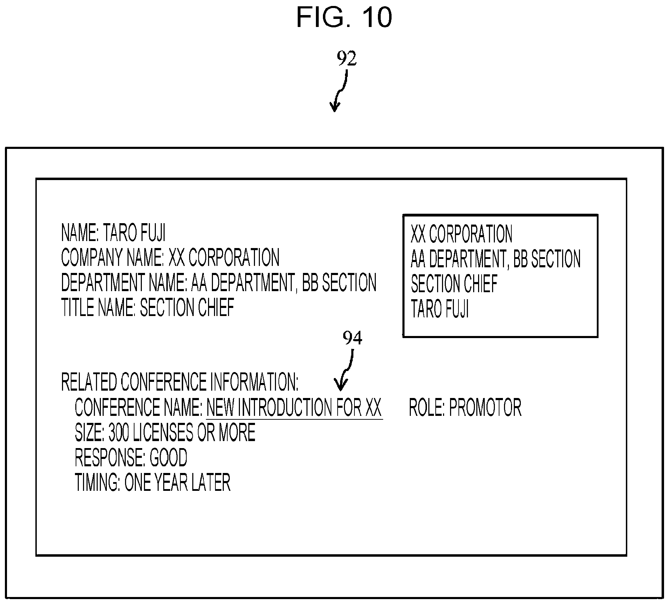

After the end of the video conference (or during the video conference meeting), the user of interest may access the business card management service and send a display request for displaying the business card information of a business card exchange destination user registered in the business card management service to the business card management service. The display request includes the user ID of the business card exchange destination user specified by the user of interest. In response to the display request, the display controller 34 displays a business card information display screen 92 as illustrated in Fig. 10 on the display of the user terminal 12.

The business card information display screen 92 illustrated in Fig. 10 is a screen for "Taro Fuji" who is a participant of the video conference mentioned above. The display controller 34 refers to the business card management DB 24 to identify business card information associated with the user ID (here, "U2064") included in the display request received from the user terminal 12. Then, the identified business card information is displayed on the business card information display screen 92. The display controller 34 also refers to the conference DB 28 to identify, of the conference information of the user of interest, conference information including, as a participant, the user ID included in the display request received from the user terminal 12. Then, conference attributes of the identified conference information and the role of "Taro Fuji" in the video conference are displayed on the business card information display screen 92. Here, the display controller 34 may refer to the role DB 26 and display the importance of the role of "Taro Fuji".

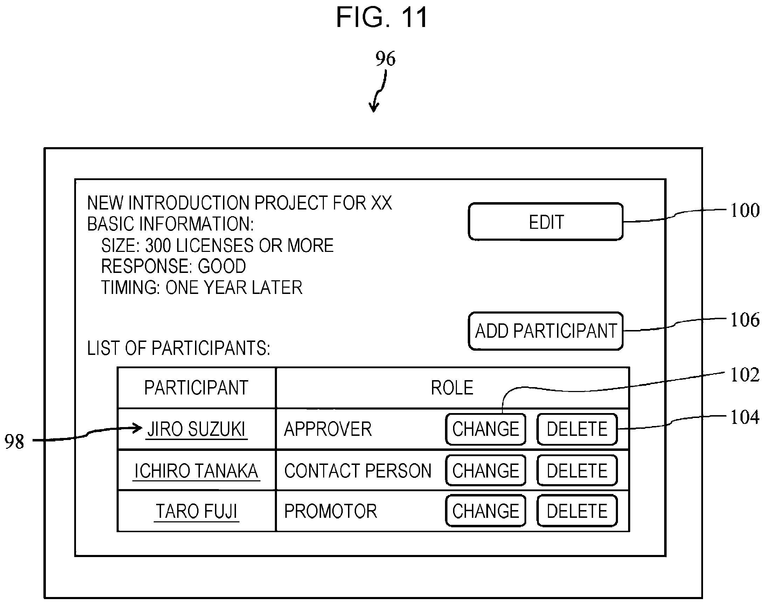

On the business card information display screen 92, a link 94 is attached to the conference name, and the user of interest may select the link 94. When the user of interest selects the link 94, the display controller 34 displays, in place of the business card information display screen 92, a conference information display screen 96 as illustrated in Fig. 11 on the display of the user terminal 12.

The conference information display screen 96 illustrated in Fig. 11 is a screen related to the video conference mentioned above. The display controller 34 displays a plurality of participants of the video conference and their roles on the conference information display screen 96 on the basis of the conference information of the user of interest. As described above, since other participants of the video conference and their roles are associated with the business card information of a participant ("Taro Fuji" in the example) of the video conference, the business card information of "Taro Fuji" as well as the other participants of the video conference in which "Taro Fuji" participated and their roles may be displayed in conjunction with one another. Accordingly, the user of interest is able to easily grasp, on the basis of the business card information of a certain participant as a start point, other participants who have participated in the video conference in which the certain participant has participated and their roles.

On the conference information display screen 96, a link 98 is attached to the name of each participant, and the user of interest may select the link 98. When the user of interest selects the link 98, the display controller 34 displays, in place of the conference information display screen 96, the business card information display screen 92 indicating the business card information of the selected participant on the display of the user terminal 12.

Note that the conference information display screen 96 includes an edit button 100. When the user of interest operates the edit button 100, the display controller 34 displays a screen for changing the conference attributes, and the user of interest is able to change the conference attributes of the video conference on the screen. The conference information display screen 96 also includes a change button 102 for changing the role of each participant and a delete button 104 for deleting the role of each participant. By operating the change button 102, the user of interest is able to change the role of a corresponding participant. In addition, by operating the delete button 104, the user of interest may delete the role of a corresponding participant. Furthermore, the conference information display screen 96 includes an add participant button 106. By operating the add participant button 106, the user of interest may select a participant of the video conference from among business card exchange destination users and add the selected participant.

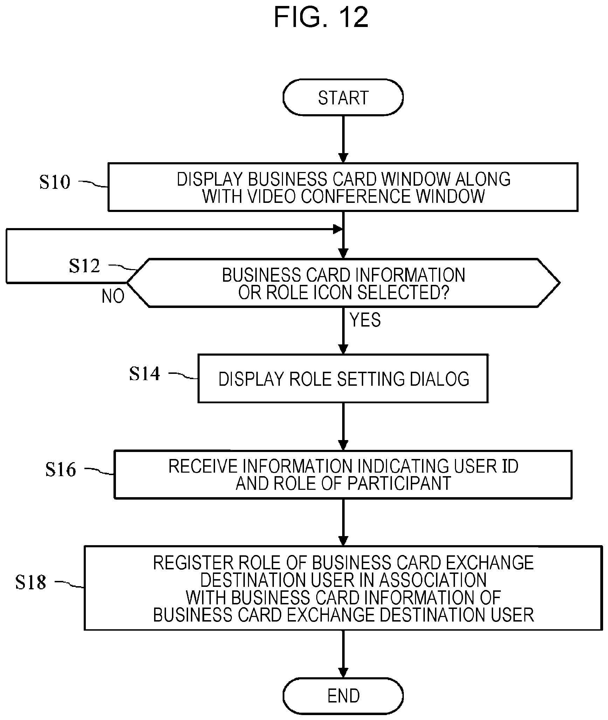

The configuration of the information processing apparatus 14 according to the present exemplary embodiment is as described above. Hereinafter, the flow of a process performed by the information processing apparatus 14 according to the present exemplary embodiment will be described according to a flowchart illustrated in Fig. 12.

In step S10, when the user of interest and one or more participants log in to the video conference service and start a video conference, the display controller 34 displays the video conference window 50 and the business card window 52 (see Fig. 6) on the display of the user terminal 12 of the user of interest.

In step S12, the display controller 34 determines whether the business card information 56 or role icon 62 of any participant displayed in the business card window 52 has been selected by the user of interest. If it is determined that the business card information 56 or role icon 62 has been selected, the process proceeds to step S14.

In step S14, the display controller 34 displays the role setting dialog 64 (see Fig. 6).

When the user of interest sets the role of the participant and operates the set button 80 in the role setting dialog 64, in step S16, information indicating the user ID of the participant and information indicating the selected role are sent from the user terminal 12 to the information processing apparatus 14, and the information processing apparatusl4 receives these items of information.

In step S18, the role registration unit 36 registers the role of the participant in association with the participant's business card information on the basis of the information received in step S16.

Although the exemplary embodiment according to the present disclosure has been described as above, the present disclosure is not limited to the above exemplary embodiment, and various changes may be made as long as they do not deviate from the gist of the present disclosure.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

## Claims

1. An information processing apparatus comprising:
a processor capable of accessing a business card management database in which business card information described on a business card of a business card exchange destination user to whom a user has exchanged business cards is registered, the processor being configured to:
during a video conference meeting in which the user and the business card exchange destination user participate, identify a role of the business card exchange destination user in the video conference, based on at least one of information input by the user or the business card information of the business card exchange destination user; and
register information indicating the identified role in association with the business card information of the business card exchange destination user.

2. The information processing apparatus according to Claim 1, wherein the processor is configured to:
display a display screen including a window of the video conference on a display; and
based on information input by the user by performing an operation on the display screen, identify the role of the business card exchange destination user.

3. The information processing apparatus according to Claim 1 or 2, wherein the processor is configured to:
based on information input by the user by performing an operation on a display screen, register importance of the role of the business card exchange destination user in the video conference; and
register information indicating the importance of the identified role in association with the business card information of the business card exchange destination user.

4. The information processing apparatus according to Claim 1 or 2, wherein:
a plurality of the business card exchange destination users participate in the video conference; and
the processor is configured to:
during the video conference meeting, identify a role of each business card exchange destination user in the video conference; and
in association with the business card information of each business card exchange destination user, register the business card information and the role of another business card exchange destination user who has participated in the video conference.

5. The information processing apparatus according to Claim 1, wherein the processor is configured to:
identify the role of the business card exchange destination user based on the business card information of the business card exchange destination user.

6. The information processing apparatus according to Claim 5, wherein the processor is configured to:
present the role of the business card exchange destination user, identified by the processor, to the user; and
modify the role of the business card exchange destination user in response to an instruction from the user.

7. A program causing a computer to execute a process, the process comprising:
accessing a business card management database in which business card information described on a business card of a business card exchange destination user to whom a user has exchanged business cards is registered;
during a video conference meeting in which the user and the business card exchange destination user participate, identifying a role of the business card exchange destination user in the video conference, based on at least one of information input by the user or the business card information of the business card exchange destination user; and
registering information indicating the identified role in association with the business card information of the business card exchange destination user.

8. An information processing method comprising:
accessing a business card management database in which business card information described on a business card of a business card exchange destination user to whom a user has exchanged business cards is registered;
during a video conference meeting in which the user and the business card exchange destination user participate, identifying a role of the business card exchange destination user in the video conference, based on at least one of information input by the user or the business card information of the business card exchange destination user; and
registering information indicating the identified role in association with the business card information of the business card exchange destination user.
